# FASCICULE DE BREVET EUROPEEN

(11) **EP 2 168 659 B1**
(45) Date de publication et mention de la délivrance du brevet: **18.01.2012**
(21) Numéro de dépôt: 09290689.0
(22) Date de dépôt: 10.09.2009
(51) Int. Cl.: B01D 53/14, B01D 53/62, B01D 53/78

(54) **Procédé de désacidification d'un gaz par solution absorbante avec contrôle de la démixtion**
Entsäuerungsverfahren eines Gases durch absorbierende Lösung mit Entmischungskontrolle
Method for deacidifying a gas by an absorbing solution with demixing control

(30) Priorité: 23.09.2008 FR 0805219
(43) Date de publication de la demande: 31.03.2010
(73) Titulaire: IFP Energies nouvelles, 92852 Rueil-Malmaison Cedex (FR)
(72) Inventeur: Bouillon, Pierre-Antoine, 69003 Lyon (FR); Jacquin, Marc, 69002 Lyon (FR); Raynal, Ludovic, 69600 Oullins (FR)

(56) Documents cités:
- WO-A-2004/026441
- FR-A- 2 898 284
- US-A1- 2004 226 441
- US-A1- 2006 032 377

## Description

La présente invention concerne le domaine de la désacidification d'un effluent gazeux au moyen d'une solution absorbante.
Le procédé selon l'invention permet de retirer les composés acides tels le dioxyde de carbone (CO₂) et l'hydrogène sulfuré (H₂S) contenus dans un effluent gazeux. Il peut s'appliquer au traitement d'un gaz naturel, d'un gaz de synthèse ou de fumées issues d'un processus de combustion.

La régénération de la solution absorbante chargée en composés acides est coûteuse, notamment sur le plan de la consommation d'énergie. Ceci représente un inconvénient important, notamment lorsque l'on met en oeuvre la solution absorbante pour capter le CO₂ présent dans des fumées de combustion. En effet si la chaleur nécessaire pour régénérer la solution absorbante est obtenue par combustion d'un combustible fossile, on peut être amené à produire une quantité supplémentaire de CO₂ qui rendrait le captage de CO₂ par absorption inintéressante.

Le document FR 2 898 284 propose de fractionner par chauffage la solution absorbante chargée en composés acides en deux parties, une fraction riche en composés acides et une partie pauvre en composés acides, et de ne régénérer par distillation que la fraction qui est enrichie en composés acides afin de minimiser l'énergie nécessaire à la régénération de la solution absorbante. Cependant, l'échauffement de la solution absorbante provoqué par la réaction exothermique entre les composés acides et ladite solution absorbante peut éventuellement provoquer la séparation de la solution absorbante en deux phases dans la colonne d'absorption. Une telle situation ne permettrait pas au procédé de fonctionner de manière optimale. La formation de deux phases liquides dans la colonne d'absorption limiterait le transfert de composés acides entre le gaz à désacidifier et la solution absorbante. Les composés acides ne pourraient plus être absorbés efficacement par la solution absorbante.
La présente invention propose de contrôler le phénomène de démixtion dans la colonne d'absorption par l'intermédiaire de un ou plusieurs refroidissements de la solution absorbante circulant dans la colonne d'absorption afin d'éviter la séparation des phases dans la colonne et d'obtenir la séparation des phases à une étape ultérieure du procédé de désacidification. L'utilisation d'un refroidissement latéral est connu de US 2006/0032377, de US 2004/0226441 ou de WO/2004/026441.
De manière générale, l'invention décrit un procédé de désacidification d'un effluent gazeux comportant au moins un composé acide du groupe constitué par l'hydrogène sulfuré (H₂S) et le dioxyde de carbone (CO₂), dans lequel on effectue les étapes suivantes :
a') on choisit une solution absorbante qui est monophasique lorsque sa température est inférieure à une température critique et qui forme deux phases liquides séparables lorsqu'elle a absorbé une quantité de composés acides et qu'elle est chauffée, la solution absorbante étant composé d'une solution aqueuse comportant au moins un composé réactif et, on détermine ladite température critique à partir de laquelle ladite solution absorbante se sépare en deux phases liquides,
a) on met en contact l'effluent gazeux avec une solution absorbante en introduisant l'effluent gazeux dans la partie inférieure d'une zone d'absorption et en introduisant la solution absorbante dans la partie supérieure de la zone d'absorption de manière à obtenir un effluent gazeux appauvri en composés acides et une solution absorbante chargée en composés acides,
b) on effectue au moins un refroidissement d'au moins une portion de solution absorbante en circulation dans la zone d'absorption, le refroidissement étant effectué par échange de chaleur indirecte avec un fluide réfrigérant le refroidissement étant effectué jusqu'à atteindre une température inférieure à une température seuil déterminée de manière à ce que la solution absorbante soit monophasique dans la zone d'absorption, c'est-à-dire qu'elle ne se sépare pas en deux phases liquides,
c) on chauffe la solution absorbante chargée en composés acides de manière à ce que la solution absorbante se sépare en deux fractions liquides : une première fraction de solution absorbante appauvrie en composés acides et une deuxième fraction de solution absorbante enrichie en composés acides,
d) on sépare lesdites deux fractions obtenues à l'étape c),
e) on régénère la deuxième fraction de manière à libérer une partie des composés acides,
f) on recycle la première fraction de solution absorbante et la solution absorbante régénérée, en tant que solution absorbante à l'étape a).

Selon l'invention, à l'étape b), on peut effectuer au moins un prélèvement d'une portion de la solution absorbante de la zone d'absorption, on refroidie ladite portion de solution absorbante à une température inférieure à la température seuil, puis on réintroduit la portion de solution absorbante refroidie dans la zone d'absorption.
A l'étape b), on peut effectuer au moins deux prélèvements de solution absorbante à des niveau différents dans la zone d'absorption.
A chaque prélèvement effectué à l'étape b), on peut soutirer entre 20% et 100% du débit de la solution absorbante introduite dans la zone d'absorption.

Selon l'invention, à l'étape b), on peut également refroidir ladite portion de solution absorbante par échange de chaleur à l'intérieur de la zone d'absorption.

De manière générale, à l'étape b), la portion de solution absorbante peut être refroidie à une température comprise entre 0 et 70°C.
A l'étape c) la solution absorbante chargée en composés acides peut être chauffée à une température comprise entre 50°C et 150°C.
A l'étape e), on peut distiller la deuxième fraction de solution absorbante de manière à produire une solution absorbante régénérée appauvrie en composés acides en libérant des composés acides sous forme gazeuse.
L'étape a) peut être effectuée dans une colonne, la première fraction de solution absorbante et la solution absorbante régénérée étant introduites en tête de la colonne.
L'étape a) peut être effectuée dans une colonne, la solution absorbante régénérée étant introduite en tête de la colonne, la première fraction de solution absorbante étant introduite à un niveau intermédiaire entre le fond et la tête de la colonne.
A l'étape d), non peut utiliser l'une des techniques de séparation suivantes : décantation, centrifugation, filtration.
La solution absorbante peut comporter un composé réactif en phase aqueuse, le composé réactif étant choisi dans le groupe constitué par : les amines, les alcanolamines, les polyamines, les acides aminés, les sels alcalins d'acides aminés, les amides, les urées, les phosphates, les carbonates et les borates de métaux alcalins.
L'effluent gazeux peut être choisi dans le groupe constitué par le gaz naturel, le gaz de synthèse, les fumées de combustion, les gaz de raffinerie, les gaz obtenus en queue du procédé Claus, les gaz de fermentation de biomasse.
A l'étape b), on peut refroidir ladite portion de solution absorbante à une température inférieure d'au moins 10°C par rapport à la température critique.

Le contrôle de la température par refroidissement dans la colonne d'absorption permet d'éviter la démixtion de la solution absorbante et, donc, de préserver les performances d'absorption de la solution.

D'autres caractéristiques et avantages de l'invention seront mieux compris et apparaîtront clairement à la lecture de la description faite ci-après en se référant aux dessins parmi lesquels :
- la figure 1 présente un mode de réalisation du procédé selon l'invention,
- les figures 2, 3 et 4 schématisent des variantes du procédé de la figure 1,
- la figure 5 représente la courbe d'évolution de la température critique de démixtion en fonction de la composition de la solution absorbante,
- la figure 6 montre des profils de température dans une colonne d'absorption.

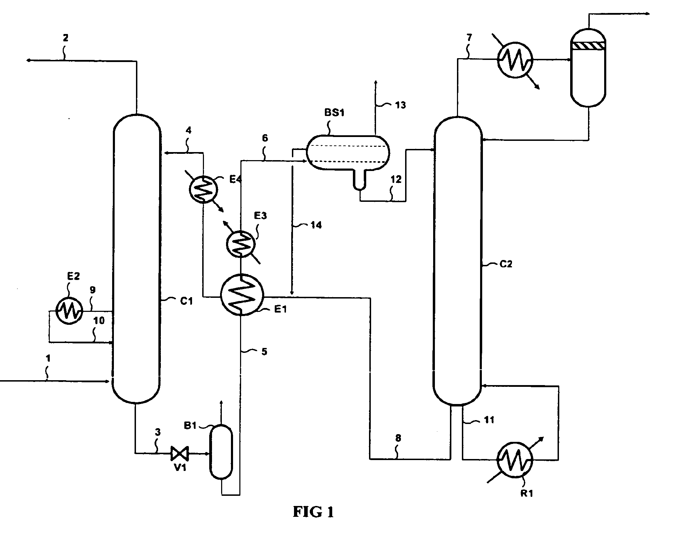

Sur la figure 1, l'effluent gazeux à désacidifier circulant dans le conduit 1 est mis en contact dans la colonne d'absorption C1 avec la solution absorbante arrivant par le conduit 4. Le procédé de désacidification selon l'invention peut être appliqué à différents effluents gazeux. Par exemple, le procédé permet de décarbonater des fumées de combustion, de désacidifier du gaz naturel ou un gaz obtenu en queue du procédé Claus. Le procédé permet également de retirer les composés acides contenus dans les gaz de synthèse, dans les gaz de conversion dans les centrales intégrées de combustion du charbon ou du gaz naturel, et dans les gaz issus de la fermentation de biomasse.
Dans la colonne C1, les composés réactifs de la solution absorbante réagissent avec les composés acides à capturer de façon à former un sel soluble dans la solution. Le gaz appauvri en composés acides est évacué de C1 par le conduit 2. La solution absorbante enrichie en composés acides, sous forme de sels dissous dans l'eau, est évacuée de C1 par le conduit 3. Cette solution absorbante enrichie en composés acides comporte néanmoins une proportion, qui peut être importante, de composés réactifs n'ayant pas réagi.
La solution absorbante est une solution aqueuse comportant un ou plusieurs composés réactifs ou présentant une affinité physico-chimique avec les composés acides. De préférence, on choisit une solution absorbante qui comporte des composés qui réagissent de manière réversible avec les composés acides, tels que l'H₂S et le CO₂. Selon l'invention, on choisit un composé réactif qui, en phase aqueuse, présente la propriété de former deux phases liquides séparables lorsqu'il a absorbé une quantité déterminée de composés acides et lorsque la température est supérieure à une température critique. En d'autres termes, on choisit le composé réactif de telle sorte que la solution absorbante chargée en composés acides forme deux phases liquides lorsque sa température dépasse une température critiqué de démixtion, c'est-à-dire un seuil de température. Lorsque la température de la solution absorbante est inférieure à la température, le composé réactif en phase aqueuse forme une solution monophasique. La composition de la solution absorbante mise en oeuvre dans le procédé selon l'invention est détaillée ci-après.
Le phénomène de démixtion que l'on met en oeuvre se produit par une élévation de la température. La Température critique à laquelle ce phénomène se produit dépend de la composition initiale de la solution aqueuse de TMHDA
Pour déterminer la température critique d'une solution absorbante composée d'un mélange composés réactifs et d'eau, on peut utiliser différentes méthodes complémentaires:
- la détermination de la température de trouble de solutions ;
- l'analyse de la composition de deux phases en équilibre.

### Température de trouble:

Cette méthode consiste à déterminer la température pour laquelle on observe un trouble de la solution, correspondant à la dispersion d'une phase dans l'autre.
En pratique, des solutions absorbantes de différentes compositions ont été placées dans un bain thermostaté, dont la température a été augmentée graduellement, jusqu'à apparition d'un trouble. Cette méthode est précise à quelques degrés près.

### Analyse des phases :

Cette méthode consiste à augmenter la température de manière à obtenir une séparation de phase nette de la solution, puis prélever chaque phases pour détermination de la concentration en amine et en eau.
En pratique, des solutions absorbantes de différentes compositions ont été placées dans un bain thermostaté, dont la température a été augmentée jusqu'à observation d'une séparation de phase nette. Chaque phase est prélevée puis analysées par dosage acide ou Karl-Fischer pour déterminer la concentration en amine et en eau.

### Température critique

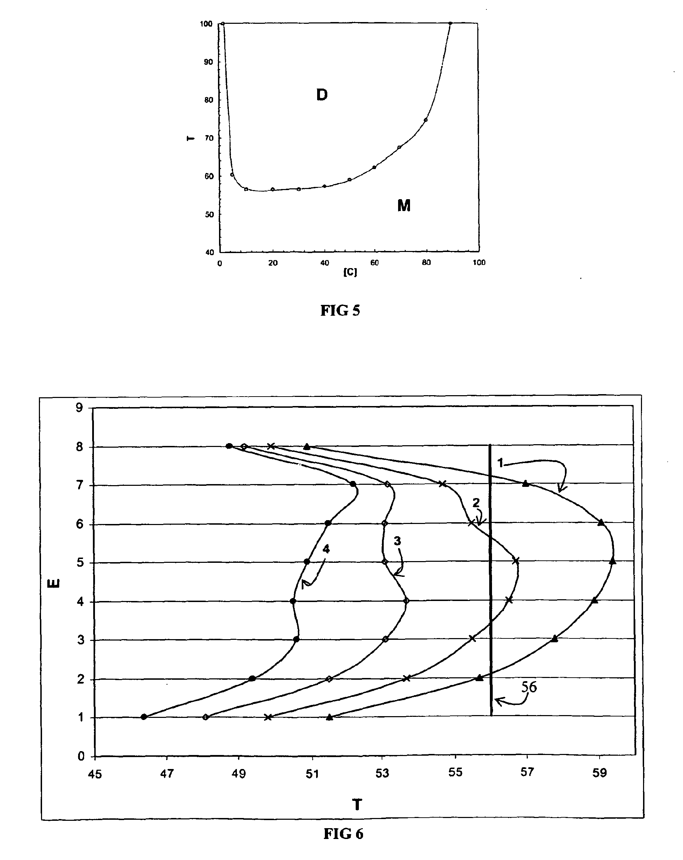

La représentation graphique des données dans un diagramme Température - Concentration tel que représenté par la figure 5 permet de distinguer une zone où les solutions absorbante selon l'invention sont monophasiques et une zone dans lesquelles elles sont diphasiques. La limite de la zone où les solutions sont diphasique a une "forme parabolique" et admet donc un minimum pour une température critique, qui est pour les solutions aqueuses de TMHDA de 57°C. En dessous de cette température critique, l'eau et la TMHDA sont solubles en toute proportion (on parle couramment de LCST pour "Lower Critical Solubility Température")

Lors de la mise en contact dans C1, la température de la solution absorbante augmente au fur et à mesure de l'absorption des composés acides contenus dans le gaz, du fait de la réaction d'absorption exothermique. Dans la colonne C1, la température de la solution absorbante passe par un maximum qui risque de dépasser la température critique de démixtion et, donc, la solution absorbante risque de se séparer en deux phases. Sous forme de deux phases séparées, le flux de composés acides transférés du gaz vers la solution serait fortement limité et devrait être compensé par une forte augmentation de la hauteur de colonne. Pour maintenir la solution absorbante monophasique dans la colonne C1, la présente invention propose d'effectuer un ou plusieurs refroidissement de la solution absorbante au cours de l'étape d'absorption. Le refroidissement est effectué par échange de chaleur indirecte entre la solution absorbante et un fluide réfrigérant, c'est-à-dire le refroidissement est effectué sans contact directe entre le fluide réfrigérant et la solution absorbante. Les échange de chaleur sont réalisés à travers une paroi d'un échangeur de chaleur, la paroi séparant la solution absorbante du fluide réfrigérant. Le positionnement du ou des refroidissements dans la colonne C1 est choisi en fonction du profil de température de la solution absorbante pour garantir un refroidissement efficace de celle ci. Généralement, il convient de positionner les refroidissements aux endroits où la température de la solution absorbante est maximale. La température critique à partir de laquelle la solution absorbante va démixer dépend de plusieurs paramètres : la composition de la solution absorbante, la nature des composés acides adsorbés et le taux de charge, c'est-à-dire le nombre de mole de composés acides qui a réagi avec une mole de composés absorbants. Le procédé selon l'invention propose de refroidir la solution de façon à toujours avoir la solution absorbante à un température en dessous de sa température critique. Selon l'invention, on peut refroidir la solution absorbante à une température inférieure à 2°C de préférence 5°C voir de 10°C en dessous de la température critique.

Par exemple selon l'invention, on effectue un ou plusieurs soutirages d'une portion de la solution absorbante, de refroidir la solution soutirée par échange de chaleur indirecte avec un fluide réfrigérant, puis de réintroduire la solution absorbante dans la colonne C1.
Selon le type d'interne de contact utilisé, des plateaux collecteurs peuvent être installés à différents niveaux dans la colonne d'absorption afin de collecter la solution absorbante liquide aux niveaux désirés. Tout ou partie du débit liquide peut être prélevé pour être refroidi et réintroduit dans la colonne à un niveau inférieur par l'intermédiaire d'un distributeur liquide. Par exemple, lors d'un soutirage on peut prélever entre 20% et 100% du débit de solution absorbante circulant dans la colonne. La portion de solution absorbante soutirée peut être refroidie à une température comprise entre 0°C et 70°C, de préférence entre 20°C et 50°C.
En référence à la figure 1, une portion de la solution absorbante en circulation dans C1 est soutirée par le conduit 9 pour être refroidie par l'échangeur E2. La solution absorbante est collectée sur des plateaux collecteurs dans C1 et tout ou partie du débit liquide est prélevé par l'intermédiaire d'un soutirage liquide latéral pour être refroidi dans E2. Les collecteurs peuvent éventuellement être équipés de déversoir pour que la partie non prélevée de la solution absorbante puisse éventuellement continuer dans la colonne par déversement. Dans l'échangeur de chaleur E2, la solution absorbante peut être refroidie par échange de chaleur indirect avec un fluide ambiant, par exemple de l'air ou de l'eau. La solution absorbante refroidie est envoyée par le conduit 10 dans la colonne C1 pour être à nouveau mise en contact avec le gaz acide dans la zone de contact, le gaz acide étant introduit dans C1 par l'intermédiaire d'un distributeur gaz.
L'échangeur de chaleur E2 doit refroidir la solution absorbante à une température suffisamment basse pour éviter la démixtion dans C1. E2 peut effectuer un refroidissement de la solution à une température comprise entre 0°C et 70°C, de préférence entre 20°C et 50°C. Le soutirage de la solution absorbante est placé de façon à réduire efficacement au maximum de la température atteinte dans la colonne, typiquement le prélèvement est effectué à l'endroit où la température de la solution absorbante est maximum dans C1.

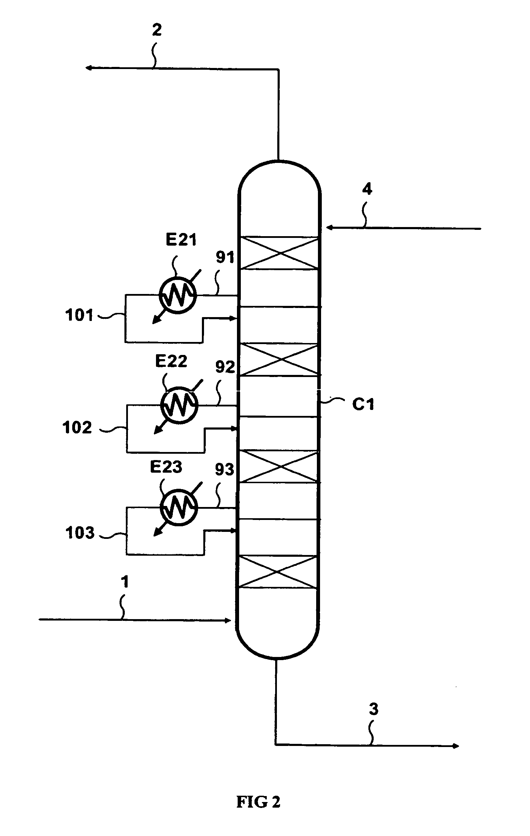

La figure 2 représente la colonne C1 de la figure 1 dans laquelle on effectue plusieurs soutirages de solution absorbante à différents niveaux de C1. En référence à la figure 2, une première portion de solution absorbante est prélevée par le conduit 91, refroidie dans l'échangeur E21, puis réintroduite dans C1 par le conduit 101. Une deuxième portion de solution absorbante est prélevée par le conduit 92, refroidie dans l'échangeur E22, puis réintroduite dans C1 par le conduit 102. Une troisième portion de solution absorbante est prélevée par le conduit 93, refroidie dans l'échangeur E23, puis réintroduite dans C1 par le conduit 103.

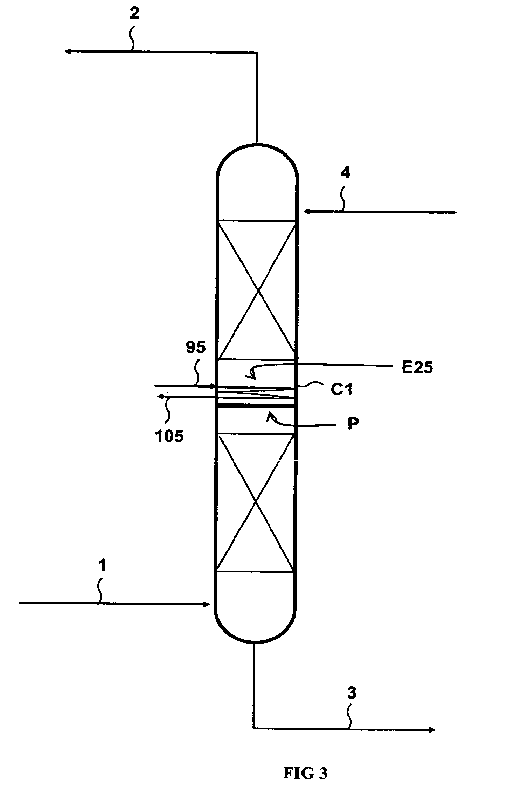

Alternativement, on peut effectuer le refroidissement de la solution absorbante directement à l'intérieur de la colonne C1. La figure 3 schématise la colonne C1 de la figure 1, dans laquelle on a disposé un échangeur de chaleur. La solution absorbante qui s'écoule dans la zone de contact située en tête de la colonne C1 est recueillie sur un plateau collecteur P. L'échangeur de chaleur E25 est disposé au-dessus du plateau P de manière à baigner dans le liquide recueilli par le plateau P. Un fluide frigorigène arrivant par le conduit 95 circule dans l'échangeur de chaleur E25 pour refroidir de manière indirecte la solution absorbante recueillie par le plateau P. La solution absorbante peut être refroidie à une température comprise entre 0°C et 70°C, de préférence entre 20°C et 50°C. Puis le fluide frigorigène est évacué de E25 par le conduit 105. La solution absorbante refroidie est distribuée de manière homogène dans la zone de contact située sous le plateau P de manière à poursuivre l'absorption. De manière générale, on peut disposer un ou plusieurs échangeurs de chaleur dans la colonne, les échangeurs étant agencés comme E25.

En référence à la figure 1, la solution absorbante circulant dans le conduit 3 peut être détendue à travers l'organe de détente V1 de manière à vaporiser une partie des composés acides absorbés et éventuellement des hydrocarbures co-absorbés dans le cas de l'utilisation du procédé selon l'invention pour la désacidification d'un gaz naturel. La fraction vapeur produite par la détente dans V1 est séparée de la solution absorbante et évacuée en tête du ballon B1. Selon sa composition, cette fraction vapeur peut être recyclée en amont du procédé, être utilisée comme gaz combustible ou bien être mélangée avec le flux circulant dans le conduit 7. Alternativement, notamment dans les cas d'application du procédé selon l'invention à la décarbonatation des fumées de combustion, la solution absorbante 3 peut ne pas subir de détente et de séparation. Dans ce cas le conduit 3 est directement connecté au conduit 5.
Ensuite, la solution absorbante est envoyée par le conduit 5 dans l'échangeur de chaleur E1 puis dans E3. Elle ressort à une température plus élevée par le conduit 6. Dans les échangeurs de chaleur E1 et E3, la solution absorbante chargée en composés acides est chauffée jusqu'à atteindre une température supérieure à la température critique à laquelle la solution chargée en composés acides forme deux phases liquides séparables. Par exemple, la solution absorbante chargée en composés acides est chauffée à une température comprise entre 50°C et 150°C, de préférence entre 70°C et 120°C. Ainsi, le fluide circulant dans le conduit 6 est composé de deux phases liquides séparables : une phase riche en composés acides et une phase pauvre en composés acides. De plus, sous l'effet de la hausse de température, une partie des composés acides est libérée sous forme gazeuse. Les trois phases du fluide circulant dans le conduit 6 sont séparées dans le ballon de séparation BS1. Par exemple, les deux phases liquides peuvent être séparées dans BS1 par décantation, centrifugation ou filtration. La fraction gazeuse issue en tête de BS1 est extraite par le conduit 13 et peut éventuellement être mélangée au flux 7. Une première fraction liquide enrichie en composés acides, c'est-à-dire enrichie en composés actifs ayant réagi avec les composés acides, est envoyée par le conduit 12 dans la colonne de régénération C2. Une deuxième fraction liquide appauvrie en composés acides, c'est-à-dire enrichie en composés actifs n'ayant pas réagi, est évacuée de BS1 par le conduit 14.
La première fraction liquide enrichie en composés acides circulant dans le conduit 12 est introduite dans la colonne C2 pour être régénérée. La colonne C2 est équipée d'un rebouilleur R1. Dans C2, les composés réactifs de la solution absorbante sont séparés des composés acides. Les composés acides sont libérés sous forme gazeuse et évacués de C2 par le conduit 7. Le flux de gaz acide 7 est partiellement condensé par refroidissement et les condensats sont renvoyés dans C2 à titre de reflux. Une partie de la solution absorbante est prélevée en fond de la colonne C2 par le conduit 11 pour être chauffée par le rebouilleur R1 et réintroduite dans le fond de la colonne C2. La solution absorbante régénérée est recueillie en fond de la colonne C2 par le conduit 8.
Il est possible d'augmenter la pression à laquelle est effectuée la régénération dans C2, pour obtenir des gaz acides sous pression, en réduisant ainsi le coût et la consommation d'énergie de l'installation de compression des gaz acides, lorsque ceux-ci doivent être réinjectés dans le sous-sol.
La chaleur libérée par le refroidissement de la solution absorbante récupérée en fond de la colonne C2 peut être récupérée pour chauffer différents flux devant être régénérés. Par exemple, en référence à la figure 1, la solution absorbante circulant dans le conduit 8 permet de réchauffer dans l'échangeur de chaleur indirect E1, la solution absorbante chargée en composés acides circulant par le conduit 5. Ensuite, cette solution est refroidie par l'échangeur E4 à la température de fonctionnement de la colonne C1, puis elle est introduite dans C1 par le conduit 4.

La nature des composés réactifs de la solution absorbante peut être choisie en fonction de la nature du ou des composés acides à traiter pour permettre une réaction chimique réversible avec le ou les composés acides à traiter. La structure chimique des composés réactifs peut aussi être choisie de manière à obtenir par ailleurs une stabilité accrue de la solution absorbante dans les conditions d'utilisation.
Les composés réactifs peuvent être par exemple et de façon non limitative des amines (primaires, secondaires, tertiaires, cycliques ou non, aromatiques ou non, saturées ou non), des alcanolamines, des polyamines, des acides aminés, des sels alcalins d'acides aminés, des amides, des urées, des phosphates, des carbonates ou des borates de métaux alcalins.
Par exemple, on peut utiliser le composé réactif suivant : N,N,N',N'-Tétraméthylhexane-1,6-diamine, couramment nommé TMHDA.
Les composés réactifs peuvent être en concentration variable par exemple comprise entre 10% et 90% poids, de préférence entre 15% et 60% poids, de manière très préférée entre 20% et 50% poids, dans la solution aqueuse.
La solution absorbante peut contenir entre 10% et 90% poids d'eau.
Dans un mode de réalisation, les composés réactifs de la solution absorbante peuvent être mélangés avec une autre amine, contenant au moins une fonction amine primaire ou secondaire afin de jouer un rôle d'activateur. La solution absorbante peut contenir de l'activateur jusqu'à une concentration de 20% poids, de préférence inférieure à 15% poids, de préférence inférieure à 10% poids.
Ce type de formulation est particulièrement intéressante dans le cas du captage du CO₂ dans les fumées industrielles, ou le traitement du gaz naturel contenant du CO₂ au dessus de la spécification désirée. En effet, pour ce type d'applications, on cherche à augmenter la cinétique de captage du CO₂, afin de réduire la taille des équipements.

Une liste non exhaustive de composés pouvant être utilisés comme activateurs est donnée ci-dessous :
- MonoEthanolAmine,
- AminoEthylEthanolAmine,
- DiGlycolAmine,
- Pipérazine,
- N-(2-HydroxyEthyl)Pipérazine,
- N-(2-AminoEthyl)Pipérazine,
- N-MethylPipérazine,
- N-EthylPipérazine,
- N-PropylPipérazine,
- 1,6-HexaneDiAmine,
- 1,1,9,9-TetraMéthylDiPropylèneTriamine,
- Morpholine,
- Pipéridine,
- 3-(MetylAmino)PropylAmine,
- N-MethylBenzylAmine.

Dans un mode de réalisation, la solution absorbante, en particulier une solution absorbante à base de N,N,N',N'-tetramethylhexane-1,6-diamine, peut aussi contenir d'autres composés organiques. Ainsi, la solution absorbante selon l'invention peut contenir des composés organiques non réactif vis-à-vis des composés acides (couramment nommé "solvant physique"), et qui permettent d'augmenter la solubilité d'au moins un ou plusieurs composés acides de l'effluent gazeux. Par exemple la solution absorbante peut comporter entre 5% et 50% poids de solvant physique tel que des alcools, des ethers de glycol, des lactames, des pyrrolidones N-alkylées, des pipéridones N-alkylées, des cyclotétraméthylènesulfone, des N-alkylformamides, des N-alkylacétamides, des ethers-cétones ou des phosphates d'alkyles et leur dérivés. A titre d'exemple et de façon non limitative, il peut s'agir du méthanol, du tetraethylèneglycoldimethylether du sulfolane ou de la N-formyl morpholine.

Dans un mode de réalisation, la solution absorbante, en particulier une solution absorbante à base de N,N,N',N'-tetramethylhexane-1,6-diamine, peut aussi comprendre un acide organique ou inorganique. Une liste non exhaustive de composés acides pouvant être utilisés à cet effet est donnée ci-dessous :
- acide formique
- acide oxalique
- acide acétique
- acide propanoique
- acide butanoique
- acide aminé (Glycine, Taurine, etc.)
- acide phosphorique
- acide phosphoreux
- acide pyrophosphorique
- acide sulfurique
- acide sulfureux
- acide nitreux
- acide chlorhydrique.

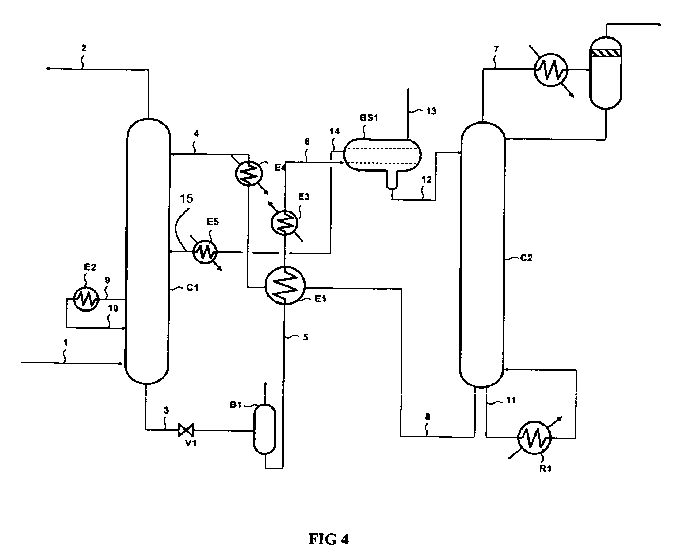

Dans certains cas, on peut souhaiter recycler une solution absorbante très pauvre en composés acides, c'est-à-dire avec une grande capacité d'absorption, en tête de la colonne C1 afin d'augmenter l'efficacité de l'élimination des composés acides et d'atteindre des spécifications poussées sur le gaz traité. Par exemple, la fraction de solution absorbante appauvrie en composés acides séparée dans le ballon de séparation BS1 peut ne pas être suffisamment performante pour capter des composés acides. Ainsi, dans certains cas, on peut préférer envoyer la fraction de solution absorbante appauvrie en composés acides issue de BS1 en un point intermédiaire de la colonne d'absorption C1, comme cela est schématisé par la figure 4. Dans ce cas, seule la fraction de solution absorbante régénérée dans C2 est envoyée en tête de la colonne C1.
Les références de la figure 4 identiques aux références de la figure 1 désignent les mêmes éléments.
Sur la figure 4, la deuxième fraction de solution absorbante appauvrie en composés acides issue de BS1 par le conduit 14 est refroidie par échange de chaleur dans E5, puis introduite par le conduit 15 en un point intermédiaire de la colonne d'absorption C1. Le conduit 15 permet d'injecter la solution absorbante dans C1 entre le fond et la tête de la colonne, à un niveau inférieur au point d'introduction par le conduit 4.
La solution absorbante régénérée obtenue en fond de la colonne C2 est envoyée après passage dans les organes E1 et E4 en tête de la colonne C1 par le conduit 4.

Les exemples numériques présentés ci-après permettent d'illustrer la présente invention.

La figure 5 montre un exemple d'évolution de la température critique T de démixtion en fonction de la concentration [C] en TMHDA (N,N,N',N'-Tétraméthylhexane-1,6-diamine) pour une solution absorbante constituée de TMHDA en solution aqueuse, n'ayant pas absorbé de composés acides. Le domaine M indique les conditions de température et de concentration pour lesquelles la solution absorbante est monophasique. Le domaine D indique les conditions de température et de concentration pour lesquelles la solution absorbante est diphasique. Dans ce cas, selon l'invention, on chercher à conserver une température de la solution absorbante inférieure à 56°C dans la zone d'absorption afin de rester dans le domaine monophasique M.

Le fonctionnement de la présente invention est illustré par l'exemple numérique décrit ci-après en référence à la figure 6. La figure 6 montre un exemple d'influence du refroidissement d'une solution absorbante sur le profil de température T suivant les étages E dans la colonne d'absorption dans un procédé du type de celui décrit en référence à la figure 1.
Pour le cas étudié, une colonne de 8 étages théoriques est nécessaire pour faire la séparation de 90% des composés acides contenus dans le gaz de charge introduit dans la colonne. La solution absorbante est composée de : TMHDA à 33% poids dissous dans de l'eau. Les caractéristiques du gaz de charge sont indiquées dans le tableau 1 ci-dessous.

**Tableau 1**

| Gaz de charge | | |
|---|---|---|
| Débit | | 78 500 kmole/h |
| Pression | | 1 bar |
| Temperature | | 40°C |
| Composition | | |
| | N2 (% mol) | 79.5 |
| | CO2 (% mol) | 13.5 |
| | H2O (% mol) | 7 |

La figure 6 montre quatre courbes correspondant au fonctionnement de quatre colonnes dans les configurations suivantes :
- la courbe 1 correspond à une colonne d'absorption selon l'art antérieur, c'est-à-dire sans soutirage latéral pour refroidir le liquide,
- la courbe 2 correspond à une colonne d'absorption telle que décrite par la figure 1 ou 3, c'est à dire avec un refroidissement,
- la courbe 3 correspond à une colonne d'absorption avec deux refroidissement,
- la courbe 4 correspond à une colonne d'absorption avec trois refroidissements comme représenté sur la figure 2.

Le tableau 2 suivant détaille les résultats obtenus.

**Tableau 2**

| | Courbe 1 | Courbe 2 | Courbe 3 | Courbe 4 |
|---|---|---|---|---|
| Soutirage | non | plateau 7 | plateaux 7 et 6 | plateaux 6, 7 et 8 |
| Température solution refroidie | - | 40°C | 40°C | 40°C |
| Fraction de solution prelevée (%mol) | 0 | 30% | 2 x 30% | 3 x 30% |
| Température max | 59.4°C | 56.7°C | 53.7°C | 52.2°C |

Sur la figure 6, on voit clairement que 2 refroidissements de la solution absorbante aux étages 6 et 7 ont été nécessaires pour maintenir la température de la solution absorbante à une valeur inférieure à 56°C, indiquée par la droite 56.

## Revendications

1. Procédé de désacidification d'un effluent gazeux comportant au moins un composé acide du groupe constitué par l'hydrogène sulfuré (H₂S) et le dioxyde de carbone (CO₂), dans lequel on effectue les étapes suivante :
a') on choisit une solution absorbante qui est monophasique lorsque sa température est inférieure à une température critique et qui forme deux phases liquides séparables lorsqu'elle a absorbé une quantité de composés acides et qu'elle est chauffée, la solution absorbante étant composée d'une solution aqueuse comportant au moins un composé réactif, et on détermine ladite température critique à partir de laquelle ladite solution absorbante se sépare en deux phases liquides,
a) on met en contact l'effluent gazeux avec une solution absorbante en introduisant l'effluent gazeux dans la partie inférieure d'une zone d'absorption et en introduisant la solution absorbante dans la partie supérieure de la zone d'absorption de manière à obtenir un effluent gazeux appauvri en composés acides et une solution absorbante chargée en composés acides,
b) on effectue au moins un refroidissement d'au moins une portion de solution absorbante en circulation dans la zone d'absorption, le refroidissement étant effectué par échange de chaleur indirecte avec un fluide réfrigérant, le refroidissement étant effectué jusqu'à atteindre une température inférieure à ladite température critique de manière à ce que la solution absorbante soit monophasique dans la zone d'absorption,
c) on chauffe la solution absorbante chargée en composés acides de manière à ce que la solution absorbante se sépare en deux fractions liquides : une première fraction de solution absorbante appauvrie en composés acides et une deuxième fraction de solution absorbante enrichie en composés acides,
d) on sépare lesdites deux fractions obtenues à l'étape c),
e) on régénère la deuxième fraction de manière à libérer une partie des composés acides,
f) on recycle la première fraction de solution absorbante et la solution absorbante régénérée, en tant que solution absorbante à l'étape a).

2. Procédé selon la revendication 1, dans lequel à l'étape b), on effectue au moins un prélèvement d'une portion de la solution absorbante de la zone d'absorption, on refroidie ladite portion de solution absorbante à une température inférieure à la température seuil, puis on réintroduit la portion de solution absorbante refroidie dans la zone d'absorption.

3. Procédé selon la revendication 2, dans lequel, à l'étape b), on effectue au moins deux prélèvements de solution absorbante à des niveau différents dans la zone d'absorption.

4. Procédé selon l'une des revendications 2 et 3, dans lequel à chaque prélèvement effectué à l'étape b), on soutire entre 20% et 100% du débit de la solution absorbante introduite dans la zone d'absorption.

5. Procédé selon la revendication 1, dans lequel, à l'étape b), on refroidit ladite portion de solution absorbante par échange de chaleur à l'intérieur de la zone d'absorption.

6. Procédé selon l'une des revendications 1 à 5, dans lequel, à l'étape b) la portion de solution absorbante est refroidie à une température comprise entre 0 et 70°C.

7. Procédé selon l'une des revendications 1 à 6, dans lequel, à l'étape c) la solution absorbante chargée en composés acides est chauffée à une température comprise entre 50°C et 150°C.

8. Procédé selon l'une des revendications précédentes, dans lequel à l'étape e), on distille la deuxième fraction de solution absorbante de manière à produire une solution absorbante régénérée appauvrie en composés acides en libérant des composés acides sous forme gazeuse.

9. Procédé selon l'une des revendications précédentes, dans lequel l'étape a) est effectuée dans une colonne, la première fraction de solution absorbante et la solution absorbante régénérée étant introduites en tête de la colonne.

10. Procédé selon l'une des revendications 1 à 8, dans lequel l'étape a) est effectuée dans une colonne, la solution absorbante régénérée étant introduite en tête de la colonne, la première fraction de solution absorbante étant introduite à un niveau intermédiaire entre le fond et la tête de la colonne.

11. Procédé selon l'une des revendications précédentes, dans lequel, à l'étape d) on utilise l'une des techniques de séparation suivantes : décantation, centrifugation, filtration.

12. Procédé selon l'une des revendications précédentes, dans lequel le composé réactif est choisi dans le groupe constitué par : les amines, les alcanolamines, les polyamines, les acides aminés, les sels alcalins d'acides aminés, les amides, les urées, les phosphates, les carbonates et les borates de métaux alcalins.

13. Procédé selon l'une des revendications précédentes, dans lequel l'effluent gazeux est choisi dans le groupe constitué par le gaz naturel, le gaz de synthèse, les fumées de combustion, les gaz de raffinerie, les gaz obtenus en queue du procédé Claus, les gaz de fermentation de biomasse.

14. Procédé selon l'une des revendications précédentes, dans lequel à l'étape b) on refroidit ladite portion de solution absorbante à une température inférieure d'au moins 2°C par rapport à la température critique.

## Claims

1. A method of deacidizing a gaseous effluent comprising at least one acid compound of the group made up of hydrogen sulfide (H₂S) and carbon dioxide (CO₂), wherein the following stages are carried out:
a') selecting an absorbent solution that is a single phase when its temperature is below a critical temperature and that forms two separable liquid phases when it has absorbed an amount of acid compounds and is heated, the absorbent solution being made up of an aqueous solution comprising at least one reactive compound, and determining said critical temperature from which said absorbent solution divides into two liquid phases,
a) contacting the gaseous effluent with an absorbent solution by feeding the gaseous effluent into the lower part of an absorption zone and by feeding the absorbent solution into the upper part of the absorption zone so as to obtain a gaseous effluent depleted in acid compounds and an absorbent solution laden with acid compounds,
b) carrying out at least one cooling of at least an absorbent solution portion circulating in the absorption zone, cooling being performed by indirect heat exchange with a cooling fluid, cooling being carried out until a temperature lower than said critical temperature is reached, so that the absorbent solution is a single-phase solution in the absorption zone,
c) heating the absorbent solution laden with acid compounds so that the absorbent solution divides into two liquid fractions: a first absorbent solution fraction depleted in acid compounds and a second absorbent solution fraction enriched in acid compounds,
d) separating said two fractions obtained in stage d),
e) regenerating the second fraction so as to release part of the acid compounds,
f) recycling the first absorbent solution fraction and the regenerated absorbent solution as absorbent solution to stage a).

2. A method as claimed in claim 1 wherein, in stage b), at least one withdrawal of a portion of the absorbent solution from the absorption zone is carried out, said absorption solution portion is cooled to a temperature below the threshold temperature and the cooled absorbent solution portion is fed again into the absorption zone.

3. A method as claimed in claim 2 wherein, in stage b), at least two absorption solution withdrawals are carried out at different levels in the absorption zone.

4. A method as claimed in any one of claims 2 and 3 wherein, upon each withdrawal carried out in stage b), between 20 % and 100 % of the absorbent solution stream fed into the absorption column are withdrawn.

5. A method as claimed in claim 1 wherein, in stage b), said absorbent solution portion is cooled by heat exchange within the absorption zone.

6. A method as claimed in any one of claims 1 to 5 wherein, in stage b), the absorbent solution portion is cooled to a temperature ranging between 0°C and 70°C.

7. A method as claimed in any one of claims 1 to 6 wherein, in stage c), the absorbent solution laden with acid compounds is heated to a temperature ranging between 50°C and 150°C.

8. A method as claimed in any one of the previous claims wherein, in stage e), the second absorbent solution fraction is distilled so as to produce a regenerated absorbent solution depleted in acid compounds by releasing acid compounds in gaseous form.

9. A method as claimed in any one of the previous claims, wherein stage a) is carried out in a column, the first absorbent solution fraction and the regenerated absorbent solution being introduced at the top of the column.

10. A method as claimed in any one of claims 1 to 8, wherein stage a) is carried out in a column, the regenerated absorbent solution being introduced at the top of the column, the first absorbent solution fraction being introduced at an intermediate level between the bottom and the top of the column.

11. A method as claimed in any one of the previous claims wherein, in stage d), one of the following separation techniques is used: decantation, centrifugation, filtration.

12. A method as claimed in any one of the previous claims, wherein the reactive compound is selected from the group consisting of: amines, alkanolamines, polyamines, amino-acids, amino-acid alkaline salts, amides, ureas, alkali metal phosphates, carbonates and borates.

13. A method as claimed in any one of the previous claims, wherein the gaseous effluent is selected from the group consisting of natural gas, syngas, combustion fumes, refinery gas, Claus tail gas, biomass fermentation gas.

14. A method as claimed in any one of the previous claims wherein, in stage b), said absorbent solution portion is cooled to a temperature at least 2°C below the critical temperature.

## Patentansprüche

1. Verfahren zur Entsäuerung eines Abgasstroms, der mindestens eine saure Verbindung der Gruppe aufweist, die aus Schwefelwasserstoff (H₂S) und Kohlendioxid (CO₂) besteht, wobei die folgenden Schritte durchgeführt werden:
a') Es wird eine absorbierende Lösung gewählt, die einphasig ist, wenn ihre Temperatur niedriger als eine kritische Temperatur ist, und die zwei trennbare flüssige Phasen bildet, wenn sie eine Menge an sauren Verbindungen absorbiert hat und erwärmt wird, wobei die absorbierende Lösung sich aus einer wässrigen Lösung zusammensetzt, die mindestens eine reaktionsfähige Verbindung aufweist, und es wird die die kritische Temperatur bestimmt, bei welcher die absorbierende Lösung sich in zwei flüssige Phasen auftrennt,
a) der Abgasstrom wird mit einer absorbierenden Lösung in Kontakt gebracht, Indem der Abgasstrom in den unteren Abschnitt eines Absorptionsbereichs eingeleitet wird und die absorbierende Lösung in den oberen Abschnitt des Absorptionsbereichs eingeleitet wird, sodass ein Abgasstrom, der an sauren Verbindungen abgereichert ist, und eine absorbierende Lösung, die mit sauren Verbindungen befrachtet ist, erhalten werden,
b) mindestens eine Teilmenge der absorbierenden Lösung, die den Absorptionsbereich durchströmt, wird abgekühlt, wobei das Abkühlen durch indirekten Wärmeaustausch mit einem Kühlfluid erfolgt, wobei bis zum Erreichen einer Temperatur abgekühlt wird, die niedriger als die kritische Temperatur ist, sodass die absorbierende Lösung im Absorptionsbereich einphasig ist,
c) die absorbierende Lösung, welche mit sauren Verbindungen befrachtet ist, wird derart erwärmt, dass die absorbierende Lösung sich in zwei flüssige Fraktionen auftrennt: eine erste Fraktion der absorbierenden Lösung, die an sauren Verbindungen abgereichert ist, und eine zweite Fraktion der absorbierenden Lösung, die an sauren Verbindungen angereichert ist,
d) die beiden Fraktionen, die in Schritt c) erhalten wurden, werden getrennt,
e) die zweite Fraktion wird derart regeneriert, dass ein Teil der sauren Verbindungen freigesetzt wird,
f) die erste Fraktion der absorbierenden Lösung und die regenerierte absorbierende Lösung werden als absorbierende Lösung wieder zum Schritt a) zurückgeführt.

2. Verfahren nach Anspruch 1, wobei in Schritt b) mindestens eine Teilmenge der absorbierenden Lösung aus dem Absorptionsbereich entnommen wird, diese Teilmenge der absorbierenden Lösung auf eine Temperatur abgekühlt wird, die niedriger als der Temperaturschwellenwert ist, woraufhin die abgekühlte Teilmenge der absorbierenden Lösung wieder in den Absorptionsbereich eingeleitet wird.

3. Verfahren nach Anspruch 2, wobei in Schritt b) die absorbierende Lösung an mindestens zwei unterschiedlichen Stellen des Absorptionsbereichs entnommen wird.

4. Verfahren nach einem der Ansprüche 2 und 3, wobei in Schritt b) an jeder der Entnahmestellen zwischen 20 % und 100 % der Flussrate der absorbierenden Lösung, welche in den Absorptionsbereich eingeleitet wird, entnommen wird.

5. Verfahren nach Anspruch 1, wobei in Schritt b) die Teilmenge der absorbierenden Lösung durch Wärmeaustausch innerhalb des Absorptionsbereichs abgekühlt wird.

6. Verfahren nach einem der Ansprüche 1 bis 5, wobei in Schritt b) die Teilmenge der absorbierenden Lösung auf eine Temperatur im Bereich von 0 bis 70 °C abgekühlt wird.

7. Verfahren nach einem der Ansprüche 1 bis 6, wobei in Schritt c) die absorbierende Lösung, welche mit sauren Verbindungen befrachtet ist, auf eine Temperatur im Bereich von 50 °C bis 150 °C erwärmt wird.

8. Verfahren nach einem der vorhergehenden Ansprüche, wobei in Schritt e) die zweite Fraktion der absorbierenden Lösung derart destilliert wird, dass eine regenerierte absorbierende Lösung erzeugt wird, die an sauren Verbindungen abgereichert ist, wobei die sauren Verbindungen gasförmig freigesetzt werden.

9. Verfahren nach einem der vorhergehenden Ansprüche, wobei der Schritt a) in einer Kolonne durchgeführt wird, wobei die erste Fraktion der absorbierenden Lösung und die regenerierte absorbierende Lösung am Kopf der Kolonne eingeleitet werden.

10. Verfahren nach einem der Ansprüche 1 bis 8, wobei der Schritt a) in einer Kolonne durchgeführt wird, wobei die regenerierte absorbierende Lösung am Kopf der Kolonne eingeleitet wird, wobei die erste Fraktion der absorbierenden Lösung an einer Stelle zwischen dem Sumpf und dem Kopf der Kolonne eingeleitet wird.

11. Verfahren nach einem der vorhergehenden Ansprüche, wobei in Schritt d) eine der folgenden Trenntechniken zur Anwendung kommt: Dekantation, Zentrifugation, Flltration.

12. Verfahren nach einem der vorhergehenden Ansprüche, wobei die mindestens eine reaktionsfähige Verbindung aus der Gruppe ausgewählt ist, die aus Folgendem besteht: den Aminen, den Alkanolamine, den Polyaminen, den Aminosäuren, den Alkalisalzen von Aminosäuren, den Amiden, den Harnstoffen, den Phosphaten, den Carbonaten und den Boraten von Alkalimetallen.

13. Verfahren nach einem der vorhergehenden Ansprüche, wobei der Abgasstrom aus der Gruppe ausgewählt ist, die aus Erdgas, Synthesegas, Verbrennungsrauchgasen, Raffineriegasen. Restgasen aus dem Claus-Verfahren, Gasen aus der Vergärung von Biomasse besteht.

14. Verfahren nach einem der vorhergehenden Ansprüche, wobei in Schritt b) die Teilmenge der absorbierenden Lösung auf eine Temperatur abgekühlt wird, die mindestens 2 °C niedriger als die kritische Temperatur ist.
